# EUROPÄISCHE PATENTANMELDUNG

(11) **EP 3 943 043 A1**
(43) Veröffentlichungstag der Anmeldung: **26.01.2022**
(21) Anmeldenummer: 21185631.5
(22) Anmeldetag: 14.07.2021
(51) Int. Cl.: A61C 17/20, A61C 17/22, A61C 17/02

(54) **VORRICHTUNG ZUR ZAHNREINIGUNG MITTELS ULTRASCHALL**

(30) Priorität: 24.07.2020 DE 202020104268 U
(71) Anmelder: TT Dental Prevent GmbH & Co. KG, 20259 Hamburg (DE)
(72) Erfinder: THOMSEN, Jens Dr., 22301 Hamburg (DE)
(74) Vertreter: RGTH

(57) **Zusammenfassung**

Um eine Vorrichtung zur Zahnreinigung mittels Ultraschall bereitzustellen, welche eine effektive und schnelle Reinigung der Zähne eines Oberkiefers und/oder eines Unterkiefers ermöglicht, wird eine Vorrichtung (100) zur Zahnreinigung mittels Ultraschall umfassend eine Zahnschiene (10) vorgeschlagen, wobei die Zahnschiene (10) Ultraschallerzeuger (11) aufweist, wobei die Zahnschiene (10) in einem an den Zähnen (17) eines Oberkiefers und/oder Unterkiefers (18) angeordneten Zustand einen Strömungskanal (20) für eine Flüssigkeit zwischen den Zähnen (17) und einer Innenseite (19) der Zahnschiene (10) ausbildet, wobei die Zahnschiene (10) mindestens eine Eintrittsöffnung (12) zum Einführen der Flüssigkeit in den Strömungskanal (20) und mindestens eine Austrittsöffnung (13) zum Herausführen der Flüssigkeit aus dem Strömungskanal (20) aufweist, wobei ferner vorgesehen ist, dass die Ultraschallerzeuger (11) zur Erzeugung von Ultraschallwellen mit einer Frequenz zwischen 150 kHz und 800 kHz ausgebildet sind.

## Beschreibung

Die vorliegende Erfindung betrifft eine Vorrichtung zur Zahnreinigung mittels Ultraschall, umfassend eine Zahnschiene, wobei die Zahnschiene Ultraschallerzeuger aufweist, wobei die Zahnschiene in einem an den Zähnen eines Oberkiefers und/oder Unterkiefers angeordneten Zustand einen Strömungskanal für eine Flüssigkeit zwischen den Zähnen und einer Innenseite der Zahnschiene ausbildet, wobei die Zahnschiene mindestens eine Eintrittsöffnung zum Einführen der Flüssigkeit in den Strömungskanal und mindestens eine Austrittsöffnung zum Herausführen der Flüssigkeit aus dem Strömungskanal aufweist.

Ferner betrifft die vorliegende Erfindung eine Verwendung einer Vorrichtung zur Zahnreinigung mittels Ultraschall.

### Technologischer Hintergrund

Aus der DE 34 30 084 A1 ist eine Vorrichtung zur Reinigung und Pflege der Zähne bekannt, die aus einem am Zahnfleisch anliegenden Unterkiefer- und Oberkieferlöffel besteht, deren Ober- beziehungsweise Unterseite von einer Metallplatte gebildet wird, auf der mindestens ein Ultraschallwandler angeordnet ist, wobei vorgesehen ist, dass die beiden Löffel während des Betriebes von einer Pumpe mit Wasser gefüllt und vom Wasser durchflossen werden, und dass der Unterkieferlöffel in der Metallplatte mindestens eine Entlüftungsöffnung aufweist.

Die DE 10 2014 008 956 A1 offenbart eine Vorrichtung zur Zahnreinigung mit einem in den Mund einführbaren Reinigungselement, das mittels einer Schwingungen erzeugenden Schwingungserzeugungseinrichtung gekoppelt ist, wobei die Schwingungserzeugungseinrichtung mit einer Betätigungseinrichtung aktivierbar ist, wobei vorgesehen ist, dass das Reinigungselement wenigstens eine, in der Gebrauchs-und Betriebsstellung wenigstens einen Teil der Zähne, vorzugsweise sämtliche Zähne, eines Ober- und/oder Unterkiefers, unter Ausbildung eines Strömungskanals mit einem definierten Spaltabstand umgreifende Zahnschiene ist.

Die DE 10 2016 002 054 B4 offenbart eine Gebissreinigungsapparatur mit einem mundgerecht geformten Mundstück, welches ausgestaltet ist, in einer Mundhöhle eine mehrere Zähne umschließende Reinigungskammer auszuformen, wobei die Reinigungskammer eine Dichtlippe aufweist, über welche die Reinigungskammer in der Mundhöhle gegenüber dem die Zähne umgebenden Zahnfleisch abdichtbar ist, wobei das Mundstück in die Reinigungskammer hineingerichtete Düsen aufweist, durch welche eine Druckspülung von Zähnen oder Interdentalzwischenräumen mit einem Fluid bewirkbar ist, wobei die Gebissreinigungsapparatur Mittel zum Befüllen der Reinigungskammer mit mindestens einem Fluid aufweist, und wobei die Gebissreinigungsapparatur einen Schwingungsgeber aufweist, mit welchem ein Fluid in der Reinigungskammer in Schall- oder Ultraschallschwingungen versetzbar ist.

Die DE 20 2017 003 642 U1 offenbart Ultraschallzahnreinigungsschienen, welche als flexible, parabelförmige Kunststoffschienen ausgebildet sind, welche mittels Ultraschall die Zähne sowie den gesamten Mundraum reinigen.

Bei den bekannten Vorrichtungen zur Zahnreinigung sind die für eine effektive Reinigung im Vergleich mit der Reinigung durch eine Handbürste vorzusehenden Anwendungszeiten jedoch meist sehr lang, oder es kann kein vollumfänglich zufriedenstellendes Reinigungsergebnis erzielt werden.

### Darstellung der Erfindung: Aufgabe, Lösung, Vorteile

Der vorliegenden Erfindung liegt die Aufgabe zugrunde, eine Vorrichtung zur Zahnreinigung mittels Ultraschall bereitzustellen, welche eine effektive und schnelle Reinigung der Zähne eines Oberkiefers und/oder eines Unterkiefers ermöglicht.

Zur Lösung der Aufgabe wird eine Vorrichtung zur Zahnreinigung mittels Ultraschall umfassend eine Zahnschiene vorgeschlagen, wobei die Zahnschiene Ultraschallerzeuger aufweist, wobei die Zahnschiene in einem an den Zähnen eines Oberkiefers und/oder Unterkiefers angeordneten Zustand einen Strömungskanal für eine Flüssigkeit zwischen den Zähnen und einer Innenseite der Zahnschiene ausbildet, wobei die Zahnschiene mindestens eine Eintrittsöffnung zum Einführen der Flüssigkeit in den Strömungskanal und mindestens eine Austrittsöffnung zum Herausführen der Flüssigkeit aus dem Strömungskanal aufweist, wobei ferner vorgesehen ist, dass die Ultraschallerzeuger zur Erzeugung von Ultraschallwellen mit einer Frequenz zwischen 150 kHz und 800 kHz ausgebildet sind.

Die Zahnschiene der Vorrichtung wird zur Reinigung der Zähne in die Mundhöhle eines Benutzers eingeführt und an den Zähnen des Oberkiefers und/oder des Unterkiefers angeordnet. Die Zahnschiene kann somit entweder nur die Zähne des Oberkiefers oder die Zähne des Unterkiefers abdecken, oder die Zahnschiene ist ausgebildet, gleichzeitig die Zähne des Ober- und des Unterkiefers abzudecken.

Zwischen den Zähnen und einer Innenseite oder den Innenseiten der Zahnschiene wird dabei ein Strömungskanal ausgebildet, durch welchen eine Flüssigkeit, bevorzugt Wasser, geleitet werden kann. Durch die im Betrieb der Vorrichtung in dem Strömungskanal geführte Flüssigkeit wird eine effektive Ankopplung der von den Ultraschallerzeugern erzeugten Ultraschallwellen an die Zähne ermöglicht.

Erfindungsgemäß ist vorgesehen, dass die Ultraschallerzeuger im Betrieb der Vorrichtung Ultraschallwellen mit einer Frequenz zwischen 350 kHz und 500 kHz erzeugen. In Versuchen der Anmelderin hat sich gezeigt, dass bei den erfindungsgemäßen Frequenzen eine besonders effektive Reinigung der Zähne in einem Zeitraum erfolgen kann, welcher üblicherweise für die Zahnreinigung mit einer Handbürste benötigt wird.

Die Ultraschallerzeuger können auch als Ultraschallschwinger oder Ultraschallwandler bezeichnet werden.

Unter einer Reinigung der Zähne wird insbesondere die Entfernung von Plaque von den Zähnen verstanden.

Bevorzugt ist die Flüssigkeit Wasser.

Es ist mindestens ein Ultraschallerzeuger vorgesehen. Bevorzugt sind mindestens drei, weiter bevorzugt mindestens fünf, insbesondere bevorzugt mindestens zehn, Ultraschallerzeuger vorgesehen.

Die Ultraschallerzeuger sind besonders bevorzugt über den Umfang der Zahnschiene gleichmäßig verteilt angeordnet.

Bevorzugt ist vorgesehen, dass die Frequenz der Ultraschallwellen zwischen 200 kHz und 600 kHz, weiter bevorzugt zwischen 350 kHz und 500 kHz, noch weiter bevorzugt zwischen 400 kHz und 450 kHz, besonders bevorzugt zwischen 410 kHz und 430 kHz, ganz besonders bevorzugt etwa 420 kHz, beträgt. Grundsätzlich kann die Frequenz der Ultraschallwellen auch zwischen 150 kHz und 400 kHz, bevorzugt zwischen 200 kHz und 300kHz, betragen.

Mit Vorteil ist vorgesehen, dass der Strömungskanal in dem an den Zähnen eines Oberkiefers und/oder Unterkiefers angeordneten Zustand einen Spaltabstand zwischen der Innenseite der Zahnschiene und den Zähnen von 0,25 mm bis 3 mm, bevorzugt von 0,5 mm bis 2 mm, weiter bevorzugt von 0,75 mm bis 1,5 mm, besonders bevorzugt von ca. 1 mm, aufweist.

Durch diese bevorzugten Spaltabstände wird einerseits eine Zahnschiene der Vorrichtung bereitgestellt, welche relativ geringe Ausmaße aufweist und somit für einen Menschen ohne größere Beeinträchtigung und relativ angenehm im Mund zum Zwecke der Zahnreinigung tragbar ist. Andererseits wird durch die bevorzugten Spaltabstände der Strömungswiderstand für die den Strömungskanal durchströmende Flüssigkeit soweit verringert, dass die Flüssigkeit die gesamte Länge des Strömungskanals durchläuft und für eine ausreichende Umspülung der Zähne gesorgt werden kann.

Mit Vorteil ist vorgesehen, dass die Ultraschallerzeuger Piezoelemente, insbesondere Keramik-Piezoelemente, sind.

Piezoelemente, insbesondere Keramik-Piezoelemente, erzeugen Ultraschall durch eine Dickenschwingung des schwingenden Materials, insbesondere der Keramik. Hierdurch können die Ultraschallerzeuger in ihren lateralen Abmessungen kleiner als übliche Ultraschallwandler gewählt werden.

Bevorzugt ist die Keramik eine PZT 5A-Keramik.

Die Ultraschallerzeuger können auch kapazitive mikromechanische Ultraschalltransponder (CMUT) oder piezoelektrische mikromechanische Ultraschalltransponder (PMUT) sein.

Weiter bevorzugt umfasst oder besteht die Zahnschiene aus Erkodur.

Bevorzugt ist eine Flüssigkeitsfördervorrichtung vorgesehen ist, wobei die Flüssigkeitsfördervorrichtung ausgebildet ist, die Flüssigkeit, insbesondere das Wasser, durch die mindestens eine Eintrittsöffnung in den Strömungskanal einzuführen, sodass die Flüssigkeit durch den Strömungskanal von der mindestens einen Eintrittsöffnung zu der mindestens einen Austrittsöffnung strömt.

Bei geeigneter Anpassung des Spaltabstandes und Ausformung der Zahnschiene kann eine klein dimensionierte Flüssigkeitsfördervorrichtung vorgesehen sein, welche im Betrieb der Vorrichtung einfach zu bedienen ist und eine nur geringe Leitungsaufnahme aufweist.

Mit weiterem Vorteil ist ein Temperierungsmittel vorgesehen, welches ausgebildet ist, die Flüssigkeit, insbesondere das Wasser, auf eine Temperatur von 30°C bis 40°C, bevorzugt von 36°C bis 38°C, insbesondere auf Körpertemperatur, zu temperieren.

Das Temperierungsmittel kann Teil der Flüssigkeitsfördervorrichtung sein. Das Temperierungsmittel kann ein elektrisches Heizelement umfassen.

Es hat sich in Versuchen des Anmelders gezeigt, dass bei einer Spülung der Zähne mit Wasser mit in etwa Körpertemperatur eine besonders effektive Zahnreinigung erzielt werden kann.

Bevorzugt ist vorgesehen, dass die Zahnschiene eine Abdichtlippe aufweist, wobei die Abdichtlippe zur Anlage an das Zahnfleisch ausgebildet ist.

Die Abdichtlippe ist insbesondere derart ausgebildet, dass diese bei der Benutzung einen leichten Druck gegen das Zahnfleisch erzeugt, sodass keine oder nur geringe Mengen der Flüssigkeit beim Betrieb aus dem Strömungskanal in den Mundraum austreten können.

Durch die Abdichtlippe wird somit ein geschlossener Strömungskanal zwischen den Zähnen und der Innenseite der Zahnschiene im an den Zähnen eines Oberkiefers und/oder Unterkiefers angeordneten Zustand hergestellt, sodass eine effektive Ankopplung der Ultraschallwellen an die Zähne ermöglicht wird.

Durch die Abdichtung des Strömungskanals mittels der Abdichtlippe wird zudem die Gefahr der Blasenbildung, insbesondere durch Ausgasung, innerhalb der Flüssigkeit verringert. Da bei einer Blasenbildung, insbesondere durch Ausgasung, die Ankopplung der Schallwellen an die Zähne verschlechtert wird, kann es zu einer unerwünschten Erwärmung der Zahnschiene und insbesondere der Ultraschallwandler kommen, da die erzeugte Schallenergie nur noch unzureichend ausgekoppelt wird. Die Erwärmung kann wiederum zu einer Ausdehnung der Ultraschallerzeuger und einer Verschiebung der Ultraschallfrequenz führen. Mittels der Abdichtlippe kann diese nachteilige Erwärmung vermieden werden.

Mit besonderem Vorteil ist vorgesehen, dass die Ultraschallerzeuger Ultraschallwellen mit einer Intensität von 0,5 W/cm² bis 10 W/cm², bevorzugt von 1 W/cm² bis 5 W/cm², weiter bevorzugt von 2 W/cm² bis 4 W/cm², erzeugen, wobei die Schallintensität weiter bevorzugt auf der Zahnoberfläche bestimmt wird.

Derartige Intensitäten der Ultraschallwellen bewirken eine effiziente Zahnreinigung, sind dabei aber gleichzeitig gering genug, so dass keine Schäden an den Zähnen auftreten.

Mit weiterem Vorteil kann vorgesehen sein, dass die Zahnschiene in einem Tiefziehprozess, insbesondere in einem Thermoformprozess, hergestellt wird.

Weiter bevorzugt wird die Zahnschiene durch Abformung der Zähne eines Oberkiefers und/oder eines Unterkiefers, weiter bevorzugt umfassend das die Zähne umgebende Zahnfleisch, hergestellt.

Ein mögliches Verfahren zur Herstellung einer erfindungsgemäßen Vorrichtung zur Reinigung von Zähnen mittels Ultraschall kann dabei wie folgt ausgestaltet sein.

Zunächst wird ein Modell bzw. ein Abguss der Zähne des Ober- und/oder des Unterkiefers angefertigt. Dabei ist bevorzugt darauf zu achten, dass die Umschlagfalte im Mundraum mit abgeformt wird. Anschließend wird an dem Modell eine Radierung, Nut oder Kerbe im Bereich des Zahnfleisches eingefügt. Die Radierung, Nut oder Kerbe weist bevorzugt eine Tiefe von ca. 0,5 mm auf. In einem weiteren, optionalen Schritt werden große Zahnzwischenräume im Modell ausgeblockt. Anschließend wird eine Folie, beispielsweise aus Erkoflex-Bleach, auf dem Modell tiefgezogen. Die Folie weist vorzugsweise eine Dicke von ca. 1 mm auf und dient als Abstandhalter zur Ausbildung des Strömungskanals zwischen den Zähnen und der Innenseite der anzufertigenden Zahnschiene. Die Abstandshalterfolie wird optional vom Modell entnommen, beschnitten und gekürzt, sodass der Marginalsaum ca. 2 mm gefasst ist, und wieder auf dem Modell angeordnet. Anschließend wird das Material für die Zahnschiene über die Abstandhalterfolie tiefgezogen. Das Material für die Zahnschiene kann dabei eine 2 mm Erkoloc-pro-Folie sein. Beim Tiefziehen des Materials für die Zahnschiene ist darauf zu achten, dass das Material bis in die mit abgeformte Umschlagfalte gezogen wird. Anschließend werden die Überschüsse der Zahnschiene beschnitten und optional kann die Zahnschiene 110 µm sandgestrahlt werden. Die Ultraschallerzeuger können schon beim Tiefziehen in dem Material der Zahnschiene angeordnet sein. Alternativ können die Ultraschallerzeuger auch nachträglich auf der Zahnschiene angeordnet und mittels Aufgießens eines Kunststoffs an der Zahnschiene fixiert werden.

Eine weitere Lösung der der Erfindung zugrundeliegenden Aufgabe besteht in der Verwendung einer vorbeschriebenen Vorrichtung, wobei die Zahnschiene an den Zähnen eines Oberkiefers und/oder eines Unterkiefers angeordnet wird, wobei ferner vorgesehen ist, dass die Ultraschallerzeuger für einen Zeitraum von 1 Minute bis 10 Minuten, bevorzugt von 3 Minuten bis 7 Minuten, insbesondere bevorzugt von 4 Minuten bis 5 Minuten, Ultraschallwellen erzeugen.

Sämtliche für die Vorrichtung vorbeschriebenen Merkmale können in entsprechender Weise auch auf die Verwendung der Vorrichtung übertragen werden.

### Kurze Beschreibung der Figuren

Die Erfindung wird nachstehend näher anhand der beigefügten Figuren erläutert. Es zeigen
- Fig. 1: eine perspektivische Darstellung einer Vorrichtung zur Zahnreinigung mittels Ultraschall, und
- Fig. 2: eine Querschnittsansicht durch eine an den Zähnen eines Unterkiefers angeordnete Vorrichtung zur Zahnreinigung mittels Ultraschall.

### Ausführliche Beschreibung der Figuren

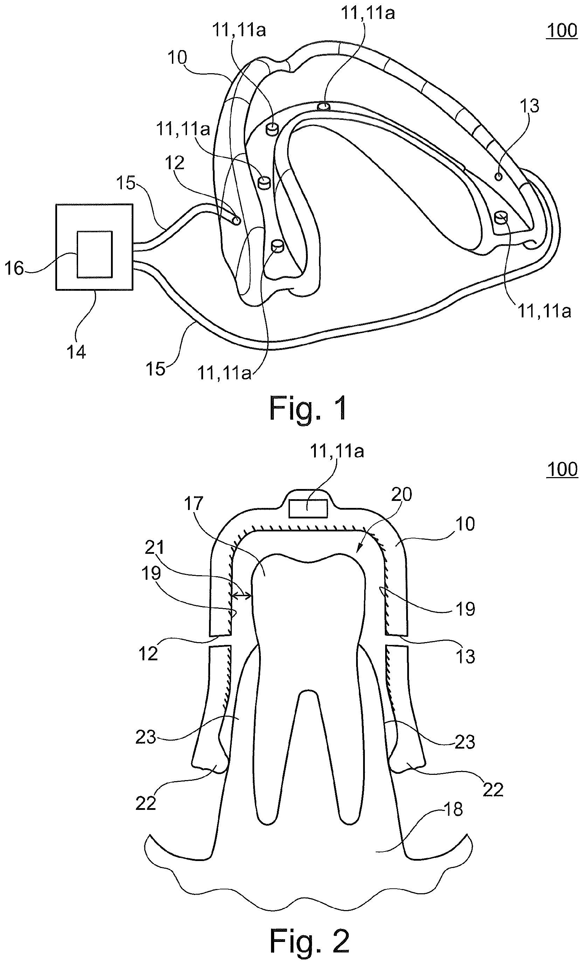

Fig. 1 zeigt eine Vorrichtung 100 zur Zahnreinigung mittels Ultraschall. Die Vorrichtung 100 umfasst eine Zahnschiene 10, welche an den Zähnen 17 eines Oberkiefers oder Unterkiefers 18 angeordnet werden kann (Fig. 2). Die Zahnschiene 10 weist Ultraschallerzeuger 11 auf. Ferner sind in der Zahnschiene 10 eine Eintrittsöffnung 12 und eine Austrittsöffnung 13 vorgesehen. In etwa auf Körpertemperatur temperiertes Wasser kann mittels einer Flüssigkeitsfördervorrichtung 14 über eine Schlauchverbindung 15 durch die Eintrittsöffnung 12 in die Zahnschiene 10 eingeleitet und durch die Austrittsöffnung 13 aus der Zahnschiene 10 herausgeführt werden. Zur Temperierung des Wassers umfasst die Flüssigkeitsfördervorrichtung 14 ein Temperierungsmittel 16. Das Temperierungsmittel 16 kann ein elektrisches Heizelement aufweisen. Die Ultraschallerzeuger 11 sind als Keramik-Piezoelemente 11a ausgebildet und können Ultraschallwellen mit Frequenzen zwischen 150 kHz und 800 kHz erzeugen.

Fig. 2 zeigt in einer Querschnittsansicht der an den Zähnen 17 eines Unterkiefers 18 angeordneten Zahnschiene 10 der Vorrichtung 100. Zwischen den Innenseiten 19 der Zahnschiene 10 und den Zähnen 17 ist ein Strömungskanal 20 mit einem Spaltabstand 21 von ca. 1 mm ausgebildet. Zur Abdichtung des Strömungskanals 20 sind an den Innenseiten 19 der Zahnschiene 10 Abdichtlippen 22 vorgesehen, welche bündig und mit leichtem Druck mit dem Zahnfleisch 23 abschließen. Beim Betrieb der Vorrichtung 100 erzeugen die Ultraschallerzeuger 11 Ultraschallwellen mit einer Frequenz zwischen 350 kHz und 500 kHz, welche über das durch den Strömungskanal 20 strömende Wasser an die Zähne 17 angekoppelt werden. Die Ultraschallwellen weisen eine Intensität von ca. 2 bis 4 W/cm² auf. Die Vorrichtung 100 wird für einen Zeitraum von ca. 2 bis 4 Minuten betrieben, wodurch eine effiziente Zahnreinigung ermöglicht wird.

### Liste der Bezugszeichen

- 100: Vorrichtung zur Zahnreinigung mittels Ultraschall
- 10: Zahnschiene
- 11: Ultraschallerzeuger
- 11a: Keramik-Piezoelement
- 12: Eintrittsöffnung
- 13: Austrittsöffnung
- 14: Flüssigkeitsfördervorrichtung
- 15: Schlauchverbindung
- 16: Temperierungsmittel
- 17: Zahn
- 18: Unterkiefer
- 19: Innenseite
- 20: Strömungskanal
- 21: Spaltabstand
- 22: Abdichtlippe
- 23: Zahnfleisch

## Patentansprüche

1. Vorrichtung (100) zur Zahnreinigung mittels Ultraschall umfassend eine Zahnschiene (10), wobei die Zahnschiene (10) Ultraschallerzeuger (11) aufweist, wobei die Zahnschiene (10) in einem an den Zähnen (17) eines Oberkiefers und/oder Unterkiefers (18) angeordneten Zustand einen Strömungskanal (20) für eine Flüssigkeit zwischen den Zähnen (17) und einer Innenseite (19) der Zahnschiene (10) ausbildet, wobei die Zahnschiene (10) mindestens eine Eintrittsöffnung (12) zum Einführen der Flüssigkeit in den Strömungskanal (20) und mindestens eine Austrittsöffnung (13) zum Herausführen der Flüssigkeit aus dem Strömungskanal (20) aufweist, **dadurch gekennzeichnet, dass** die Ultraschallerzeuger (11) zur Erzeugung von Ultraschallwellen mit einer Frequenz zwischen 150 kHz und 800 kHz ausgebildet sind.

2. Vorrichtung (100) nach Anspruch 1, **dadurch gekennzeichnet, dass** die Frequenz der Ultraschallwellen zwischen 200 kHz und 600 kHz, bevorzugt zwischen 350 kHz und 500 kHz, weiter bevorzugt zwischen 400 kHz und 450 kHz, besonders bevorzugt zwischen 410 kHz und 430 kHz, ganz besonders bevorzugt etwa 420 kHz, beträgt.

3. Vorrichtung (100) nach Anspruch 1 oder 2, **dadurch gekennzeichnet, dass** der Strömungskanal (20) in dem an den Zähnen (17) eines Oberkiefers und/oder Unterkiefers (18) angeordneten Zustand einen Spaltabstand (21) zwischen der Innenseite (19) der Zahnschiene (10) und den Zähnen (17) von 0,25 mm bis 3 mm, bevorzugt von 0,5 mm bis 2 mm, weiter bevorzugt von 0,75 mm bis 1,5 mm, besonders bevorzugt von ca. 1 mm, aufweist.

4. Vorrichtung (100) nach einem der vorgenannten Ansprüche, **dadurch gekennzeichnet, dass** die Ultraschallerzeuger (11) Piezoelemente, insbesondere Keramik-Piezoelemente (11a), oder kapazitive mikromechanische Ultraschalltransponder (CMUT) oder piezoelektrische mikromechanische Ultraschalltransponder (PMUT), sind.

5. Vorrichtung (100) nach einem der vorgenannten Ansprüche, **dadurch gekennzeichnet, dass** eine Flüssigkeitsfördervorrichtung (14) vorgesehen ist, wobei die Flüssigkeitsfördervorrichtung (14) ausgebildet ist, die Flüssigkeit durch die mindestens eine Eintrittsöffnung (12) in den Strömungskanal (20) einzuführen, so dass die Flüssigkeit durch den Strömungskanal (20) von der mindestens einen Eintrittsöffnung (12) zu der mindestens einen Austrittsöffnung (13) strömt.

6. Vorrichtung (100) nach einem der vorgenannten Ansprüche, **dadurch gekennzeichnet, dass** ein Temperierungsmittel (16) vorgesehen ist, welche ausgebildet ist, die Flüssigkeit auf eine Temperatur von 30°C bis 40°C, bevorzugt von 36°C bis 38°C, insbesondere auf Körpertemperatur, zu temperieren.

7. Vorrichtung (100) nach einem der vorgenannten Ansprüche, **dadurch gekennzeichnet, dass** die Zahnschiene (10) eine Abdichtlippe (22) aufweist, wobei die Abdichtlippe (22) zur Anlage an das Zahnfleisch (23) ausgebildet ist.

8. Vorrichtung (100) nach einem der vorgenannten Ansprüche, **dadurch gekennzeichnet, dass** die Ultraschallerzeuger (11) Ultraschallwellen mit einer Intensität von 0,5 W/cm² bis 10 W/cm², bevorzugt von 1 W/cm² bis 5 W/cm², weiter bevorzugt von 2 W/cm² bis 4 W/cm², erzeugen.

9. Vorrichtung (100) nach einem der vorgenannten Ansprüche, **dadurch gekennzeichnet, dass** die Zahnschiene (10) in einem Tiefziehprozess, insbesondere in einem Thermoformprozess, hergestellt wird.

10. Verwendung einer Vorrichtung (100) zur Zahnreinigung mittels Ultraschall nach einem der vorgenannten Ansprüche, wobei die Zahnschiene (10) an den Zähnen (17) eines Oberkiefers und/oder eines Unterkiefers (18) angeordnet wird, **dadurch gekennzeichnet, dass** die Ultraschallerzeuger (11) für einen Zeitraum von 1 Minute bis 10 Minuten, bevorzugt von 3 Minuten bis 7 Minuten, insbesondere bevorzugt von 4 Minuten bis 5 Minuten, Ultraschallwellen erzeugen.
